# EUROPEAN PATENT APPLICATION

(11) **EP 1 280 083 A1**
(43) Date of publication of application: **29.01.2003**
(21) Application number: 02016305.1
(22) Date of filing: 24.07.2002
(51) Int. Cl.: G06F 17/60

(54) **Method, system, device and program for acquiring information regarding environmental load and/or product status information**

(30) Priority: 24.07.2001 JP 2001223640
(71) Applicant: Ricoh Company, Ltd., Tokyo 143-8555 (JP)
(72) Inventor: Noritake, Yuji, Yokohama-shi, Kanagawa 240-0051 (JP); Satoh, Takako, Yokohama-shi, Kanagawa 221-0825 (JP)
(74) Representative: Schwabe - Sandmair - Marx

(57) **Abstract**

A copier (300) which is installed in a company (200) periodically sends information representing the status information thereof, from a sender (400) to an information center (100). The information center (100) stores the status information sent from the sender (400). The information center (100) stores in advance information representing an environmental load of each product. The information center (100) performs inventory analysis and impact assessment based on the stored information, in association with each target product to be analyzed, thereby quantitatively acquiring the level of the environmental load in a stage where each product is used.

## Description

The present invention relates to a method, system, device and program for acquiring information regarding an environmental load, and, more particularly, to a method, system and program for acquiring information regarding an environmental load, that are suitable for measuring the environmental load of a target product in a stage where the product is used.

Recently, as the environmental matters are more and more important and seriously concerned, a reduction in the environmental load is one of the most important issues to be realized in business organizations. In such context, it is popular to assess business activities of companies, from the aspect of the environmental management typically ISO14000 standards. For example, in the manufacturing industry, it is highly demanded that products causing only a low environmental load should be manufactured.

There is a method, called "LCA" (Life Cycle Assessment) as one method of setting the standards for assessing the environmental load. According to the LCA method, the environmental load with respect to a predetermined product is quantitatively obtained totally throughout a plurality of life stages of the product. In more particular, the plurality of life stages of the product includes stages of: collecting raw materials of the product; forming materials using the collected raw materials; manufacturing component parts of the product; forming the product; selling the formed product; transporting the product; using the product; dumping the product; and recycling the product.

According to the LCA method, it is relatively easy to examine or collect quantitative data representing the environmental load in the "manufacturing" stage or "dumping" stage, as a result of experiment, etc. The environmental load in the "using" stage remarkably depends on the usage status of the target product, and hence it is not really easy to acquire the environmental load. According to a well-adopted method of obtaining the environmental load in the "using" stage, the average model regarding the usage of the target product is estimated and a theoretical value derived based on the average model is used to obtain the environmental load in that stage.

Since the target product can be used in various manners, the practical result can not be obtained based on the value derived from the average model. Thus, it is remarkably demanded that there should be proposed a method of accurately measuring the environmental load in the "using" stage of the product.

In any industry other than the manufacturing industry, it may be required to obtain the environmental assessment. In such industry, the environmental load resulting from the business activities, etc. needs to be measured. In this case, the environmental load includes the environmental load occurring in the "using" stage of the target product. Therefore, it is particularly demanded that there will be a method of accurately measuring the environmental load in the "using" stage of the product.

The present invention has been made in consideration of the above. It is accordingly an object of the present invention to provide a method, system, device, and program for acquiring information regarding an environmental load and/or product status information, for accurately measuring the environmental load in a stage where a target product is being used.

In order to accomplish the above object, according to the first aspect of the present invention, there is provided a method of acquiring information regarding an environmental load, characterized by comprising the steps of:
collecting status information representing a state or status of a predetermined apparatus through a communication network; and
measuring the environmental load, based on the status information collected at the collecting step.

The status information may include at least either one of information representing an amount of resources consumed by the predetermined apparatus and information representing an operational time period of the predetermined apparatus.

The status information may be classified by predetermined assessment item of the environmental load so as to measure the environmental load, at the measuring step.

The method may be characterized by further comprising the step of
providing a user of the predetermined apparatus with a proposal for environmental control, based on the environmental load measured at the measuring.

In order to accomplish the above object, according to the second aspect of the present invention, there is provided an environmental-load information acquisition system which acquires status information of a predetermined apparatus (300) through a communication network (2), and which includes a server (100) acquiring information representing an environmental load resulting from the predetermined apparatus, the system being characterized in that the server includes:
a status-information collector (110) which collects the status information of the predetermined apparatus (300) therefrom, through the communication network (2); and
a measurement unit (120) which measures the environmental load of the predetermined apparatus, based on the status information collected by the status-information collector (110).

The status information may include at least one of information representing an amount of resources consumed by the predetermined apparatus (300) and information representing an operational time period of the predetermined apparatus.

In order to accomplish the above object, according to the third aspect of the present invention, there is provided a status-information acquisition device (400) which acquires status information of a predetermined apparatus (300) through a communication network (2), and which is used in an environmental-load information acquisition system acquiring information representing an environmental load resulting from the predetermined apparatus, the environmental-load information acquisition system being characterized by comprising:
a receiver (41) which is connected to the predetermined apparatus and receives the status information of the predetermined apparatus (300) therefrom;
a storage unit (42) which stores the received status information; and
a sender (43) which is connected to the communication network (2) and sends the status information stored in the storage unit (42).

The sender (43) may send the status information at predetermined intervals.

In order to accomplish the above object, according to the fourth aspect of the present invention, there is provided a program for controlling a computer to serve as a server included in the above-described environmental-load information acquisition system.

The object and other objects and advantages of the present invention will become more apparent upon reading of the following detailed description and the accompanying drawings in which:
FIG. 1 is a diagram showing the structure of an information collection system according to an embodiment of the present invention;
FIG. 2 is a block diagram showing the structure of an information center shown in FIG. 1;
FIG. 3 is a diagram showing an example of information to be sent by a sender shown in FIG. 1;
FIG. 4 is a diagram showing an example of information to be stored in a product-information database shown in FIG. 2;
FIG. 5 is a diagram showing an example of information to be stored in an inventory-result storage unit shown in FIG. 2;
FIG. 6 is a diagram showing an example of information to be stored in an impact-assessment storage unit shown in FIG. 2;
FIG. 7 is a diagram showing an example of information to be stored in a customer-information database shown in FIG. 2;
FIG. 8 is a block diagram showing the structure of a copier and sender shown in FIG. 2;
FIG. 9 is a flowchart for explaining a process for sending and storing status information, which is carried out by the information collection system of FIG. 1;
FIG. 10 is a flowchart for explaining a process for analyzing the environmental load, which is carried out by the information collection system of FIG. 1; and
FIG. 11 is a diagram showing a table representing assessment results of the environmental impacts, which are graded in the range from "A" to "C".

An information collection system according to an embodiment of the present invention will now be described with reference to the accompanying drawings.

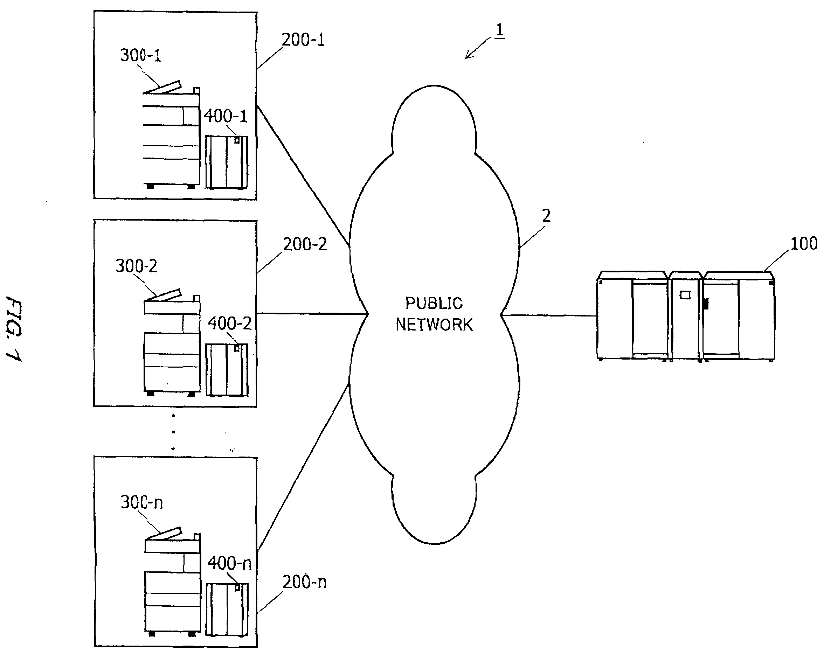

FIG. 1 is a diagram schematically showing the structure of an information collection system according to an embodiment of the present invention. In this embodiment, those copiers will be described as target apparatuses concerned, by way of example. Further, in this embodiment, information is collected from companies having such copiers installed therein.

As shown in FIG. 1, the information collection system 1 according to this embodiment comprises a communication network 2, an information center 100, a plurality of companies 200-1 to 200-n, a plurality of copiers 300-1 to 300-n, and a plurality of senders 400-1 to 400-n connected respectively to the copiers 300-1 to 300-n.

The communication network 2 (hereinafter a "public network") includes, for example, a public network, and transmits information to be sent by the senders 400-1 to 400-2, as will be described later.

The information center 100 is a server managed by a business organization which manufactures and sells the copiers 300. The information center 100 collects status information representing the status of the copiers 300, from each of the senders 400-1 to 400-n.

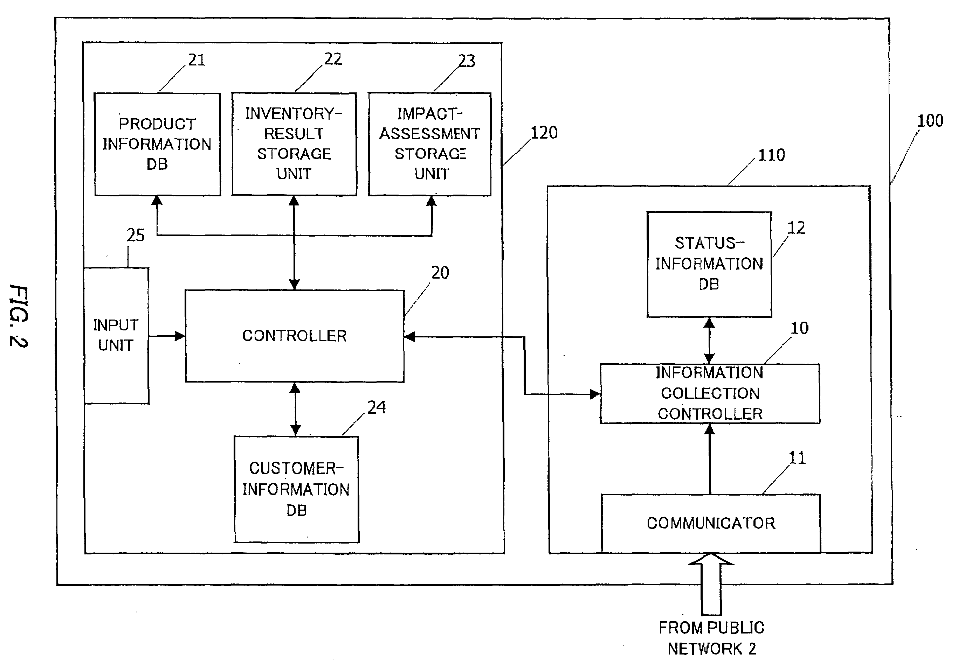

The structure of the information center 100 will now be described with reference to FIG. 2. FIG. 2 is a block diagram exemplarily showing the structure of the information center 100.

The information center 100 comprises an information collector 110 which collects the status information and an information analyzer 120 which analyzes (measures) the status information collected by the information collector 110.

The structure of the information collector 110 will now be described. As shown in FIG. 2, the information collector 110 comprises an information collection controller 10, a communicator 11, a status-information database 12.

The information collection controller 10 includes, for example, a CPU (Central Processing Unit), and controls each unit of the information collector 110.

The communicator 11 is a communication device, such as a modem, a TA (Terminal Adapter), a router, or the like. The communicator 11 is connected to the public network 2, and receives status information representing the status of the copiers 300 from the later-described senders 400.

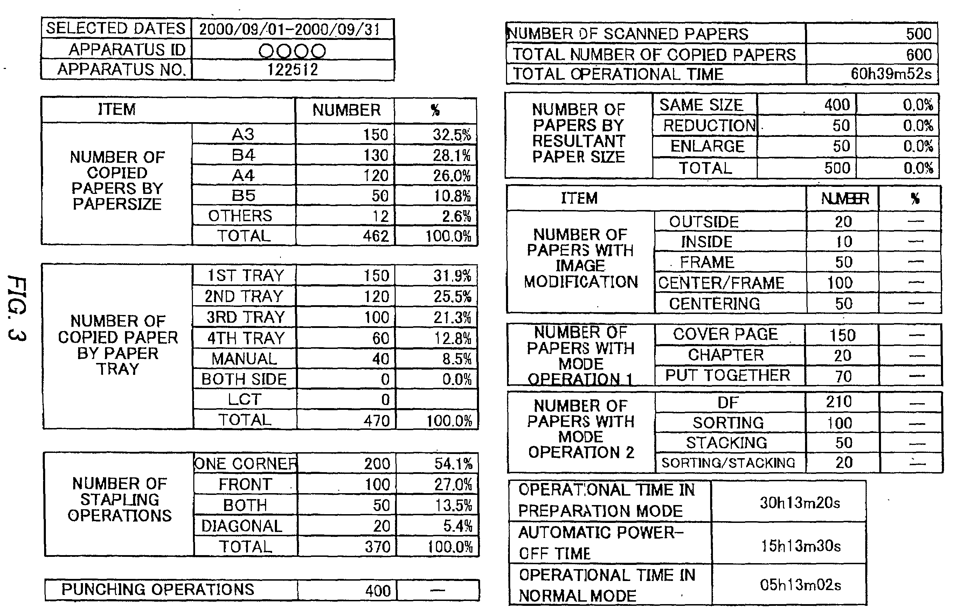

The status-information database 12 includes a rewritable recording device, such as a hard disk device, etc. The status-information database 12 cumulatively stores and sorts status information shown in FIG. 3, by customer. Note that this status information is sent from each of the senders 400 and received by the communicator 11. As shown in FIG. 3, the status information is created in the unit of each of the copiers 300, and includes information representing: the number of documents read by each of the copiers 300; the number of copied documents; the usage percentage of each operational mode of each copier; and the operating time of each copier. The status information is processed using an LCA (Life Cycle Assessment) method, as will be described later.

The structure of the information analyzer 120 will now be described. As shown in FIG. 2, the information analyzer 120 comprises a controller 20, a product information database 21, an inventory-result storage unit 22, an impact-assessment storage unit 23, a customer-information database 24, and an input unit 25.

The controller 20 includes a CPU, for example, and controls each unit of the information analyzer 120. The controller 20 executes a predetermined operational program stored in a non-illustrative memory, etc., so as to realize each of the following processes. The controller 20 executes a program according to a predetermined LCA method, thereby analyzing the status information stored in the status-information database 12. At this time, the controller 20 performs inventory analysis and impact assessment of the copiers 300, based on the status information.

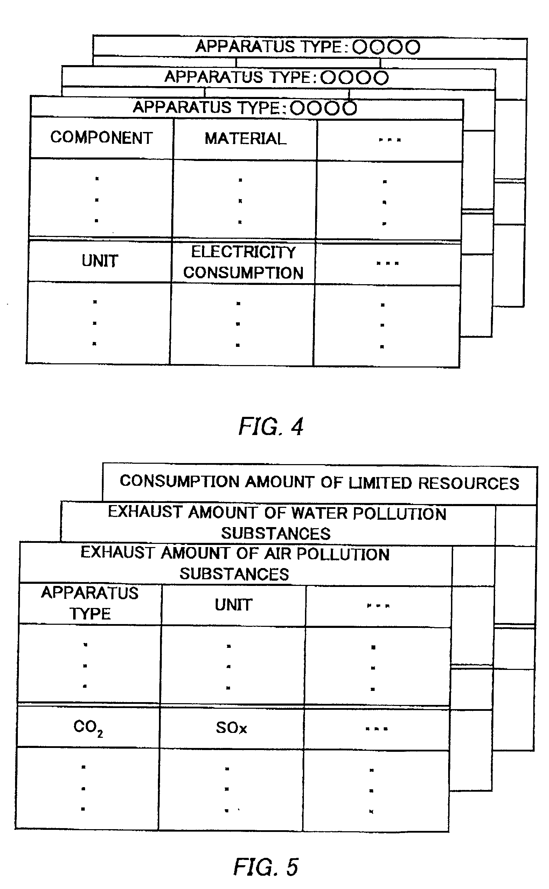

The product-information database 21 includes a rewritable recording device, such as a hard disk device, etc. The product-information database 21 cumulatively stores product information representing the structure and performance of each copier manufactured and sold by the business organization managing the information center 100, as shown in FIG. 4.

The product information includes: information regarding each copier and its elemental components (e.g. materials, their durability, and recyclability, etc.); and information representing the amount of resources used for operating each copier in a unit time. In this case, the amount of resources represents: the consumption of electricity required for copying each paper by a corresponding copier; the exhaust amount of substances, such as CO₂, NOx, SOx, etc. per unit electricity, that may cause air pollution; the consumption of resources to be exhausted, etc. Such information included in the product information is assessed, based on a general database or a dedicated database, etc.

The inventory-result storage unit 22 includes a rewritable storage device, such as a hard disk device, etc. The inventory-result storage unit 22 stores, as shown in FIG. 5, results of inventory analysis obtained by the controller 20 based on the status information and product information, by predetermined assessment items for measuring an environmental load.

Note that the inventory analysis is to quantitatively specify how resources are used in relation to their environmental load, in the lifecycle of products (copiers). The controller 20 analyzes the status information based on the product information, and quantitatively assesses each copier 300 in accordance with a predetermined assessment item for measuring the environmental load within a predetermined operational time period of the products.

In the example shown in FIG. 5, there are shown some assessment items for measuring an environmental load. These assessment items include the exhaust amount of substances causing air pollution (air pollutant), the exhaust amount of substances causing water pollution (water pollutant), the consumption of resources to be exhausted, etc. For example, the assessment item of the "exhaust amount of substances causing air pollution" includes some information regarding the exhaust amounts of CO₂ and SOx within a predetermined operational time period of the products.

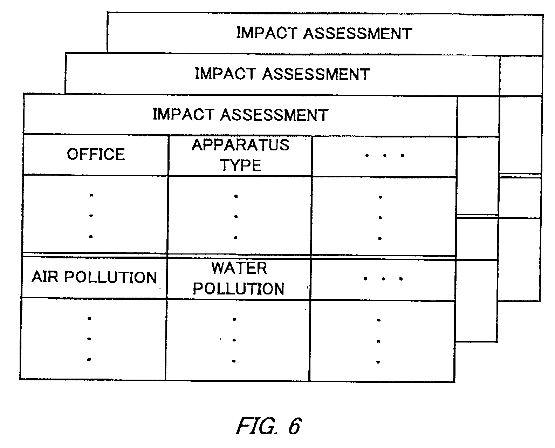

The impact-assessment storage unit 23 includes a rewritable storage device, such as a hard disk device, etc. The impact-assessment storage unit 23 cumulatively stores results of impact assessment done by the controller 20. The impact-assessment storage unit 23 stores the quantitatively measured environmental effect, by each target object to be analyzed, based on the results of inventory analysis stored in the inventory-result storage unit 22. In this case, the target unit of analysis (assessment) may be set in the unit of company, office, floor, apparatus. FIG. 6 exemplarily shows such results of impact assessment, in the unit of office concerned.

In this case, the impact assessment is to specify to what extent the measured environmental impact obtained as a result of the inventory analysis effects on the human beings, society, etc. The inventory analysis is carried out as follows:

The results of the inventory analysis stored in the inventory-result storage unit 22 are classified, according to predetermined environmental factors, such as an air pollution factor, a water pollution factor, wastes, etc. After the classification, the environmental effect is measured according to each environmental factor. Finally, the measured environmental factor is weighted. By performing these three steps, the environmental load of the target unit of analysis within a predetermined period can be measured.

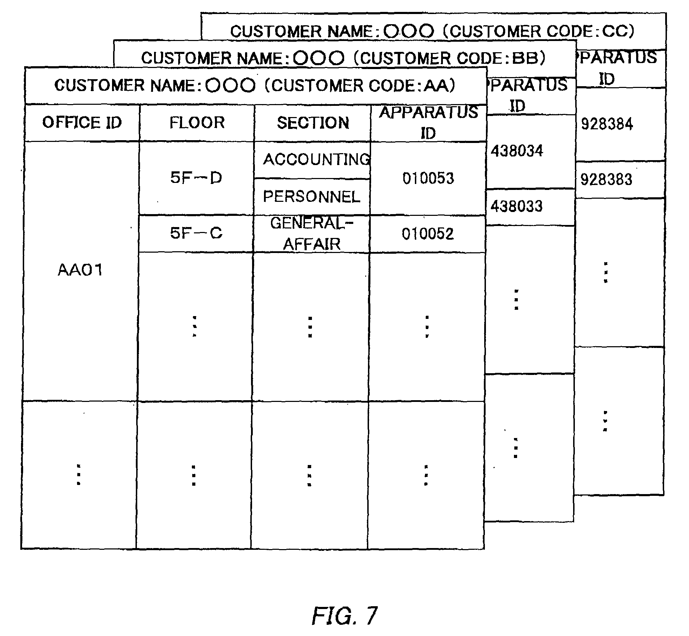

The customer-information database 24 includes a rewritable storage device, such as a hard disk device, etc., and stores information regarding customers of the company having the copier 300 installed therein. As shown in FIG. 7, a data file having a plurality of records is prepared in association with each company (customer), and an office code is assigned to each office included in the company. Each record corresponding to an office includes data items of "Floor Code" specifying each floor of the company, "Section" on each floor within the company, and "Apparatus ID" of the copier 300 in association with each section. Note that the data item "Apparatus ID" is to specify not only the copier 300 itself, but also its related functions, etc.

The input unit 25 includes a keyboard, a mouse, etc. The input unit 25 adds, corrects, and erases mainly the contents of the product-information database 21, the inventory-result storage unit 22, the impact-assessment storage unit 23, and the customer-information database 24, etc. The input unit 25 is used, for example, when adding product information regarding a new product to the product-information database 21.

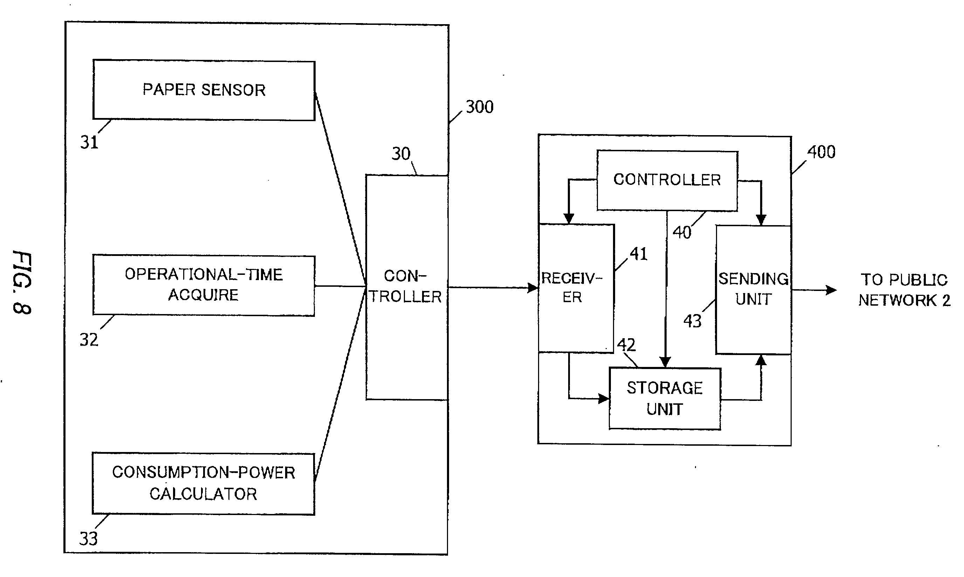

The structure of each of the copier 300 and the sender 400 which are installed in each company 200 will now be described with reference to FIG. 8.

FIG. 8 is a block diagram exemplarily showing the structure of each of the copier 300 and the sender 400 included in the information collection system according to this embodiment.

The copier 300 comprises a controller 30, a paper sensor 31, an operational-time acquirer 32, and a consumption-power calculator 33.

The controller 30 includes, for example, a CPU, etc., controls each unit of the copier 300, and sends information acquired from the paper sensor 31, the operational-time acquirer 32 and the consumption-power calculator 33, to the sender 400.

The paper sensor 31 counts the number of papers used in the copier 300. Specifically, the paper sensor 31 counts the number of original documents to be processed, the numbers of paper used for copying the original documents according to each operational mode, and the numbers of paper according to each paper cassette holding the paper.

The operational-time acquirer 32 includes, for example, a timer circuit, etc., clocks and records the operation time of the copier 300. The copier 300 includes various operational modes for less consumption power.

The consumption-power calculator 33 calculates the amount of electricity consumed for operating the copier 300, in cooperation with the operational-time acquirer 32, and records the calculated amount of electricity.

The sender 400 comprises, as shown in FIG. 8, a controller 40, a receiver 41, a storage unit 42, and a sending unit 43.

The sender 400 includes a CPU, for example, and controls each unit of the sender 400.

The receiver 41 receives the status information of the copier 300 sent therefrom.

The storage unit 42 includes a rewritable storage device, such as a hard disk device, etc., and stores the status information of the copier 300 which is received by the receiver 41 for a predetermined time.

The sending unit 43 is connected to the public network 2, and sends the information stored in the storage unit 42 to the information center 100.

In this embodiment, for the sake of easy description, the explanations will be made to the case wherein one copier 300 is connected to one sender 400. However, the information collection system may be employed to the case, wherein there are the plurality of copiers 300 in the company 200 (or on the same floor, or within the same section, etc.), the plurality of copiers 300 may be connected to a single sender 400. In this embodiment, the copier 300 and the sender 400 are separated. However, the copier 300 may include the functions of the sender 400.

Operations of the information collection system according to the embodiment of the present invention will now be described with reference to the accompanying drawings.

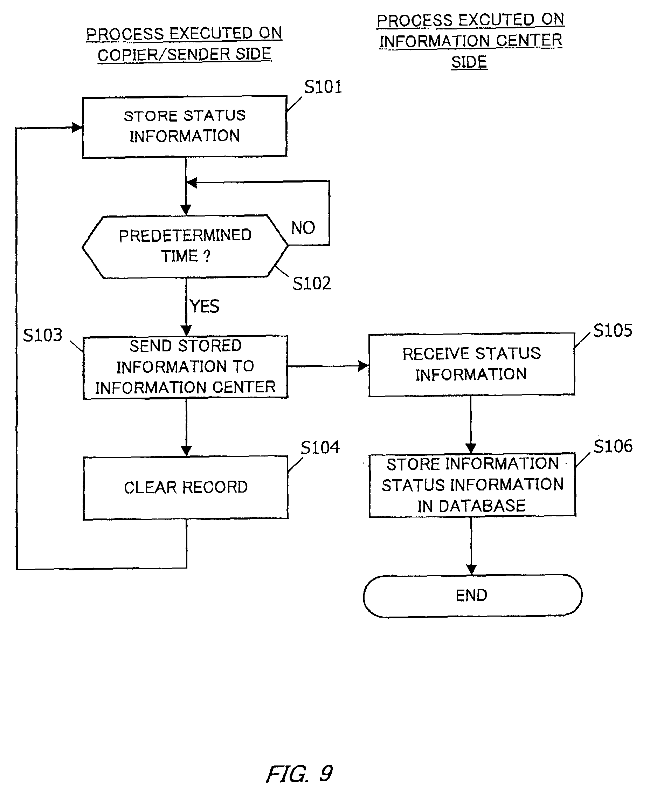

A process for sending and storing the status information will now be described with reference to the flowchart of FIG. 9.

Each copier 300 sends status information representing the status of the copier 300 and classified by operation, as shown in FIG. 3, to the sender 400. Upon reception of the status information, the sender 400 stores the received information in the storage unit 42 (Step S101). At this time, the copier 300 sends signals detected by the paper sensor 31 and the operational-time acquirer 32 and information representing the operations of the consumption-power calculator 33, to the sender 400.

The sender 400 sends the information stored in the storage unit 42 to the information center 100 at predetermined intervals. Hence, the sending unit 43 sends the information stored in the storage unit 42 to the information center 100 at a predetermined time (Step S102: YES, S103).

After the sending unit 43 completely sends the information, the controller 40 clears the information stored in the storage unit 42, and waits until further information is sent from the copier 300 (Step S104).

In the center 100, the status information sent from each sender 400 in the step S103 is received by the communicator 11 of the information collector 110, and stored in the status-information database 12 (Steps S105, S106). In this case, the status information is stored according to customer.

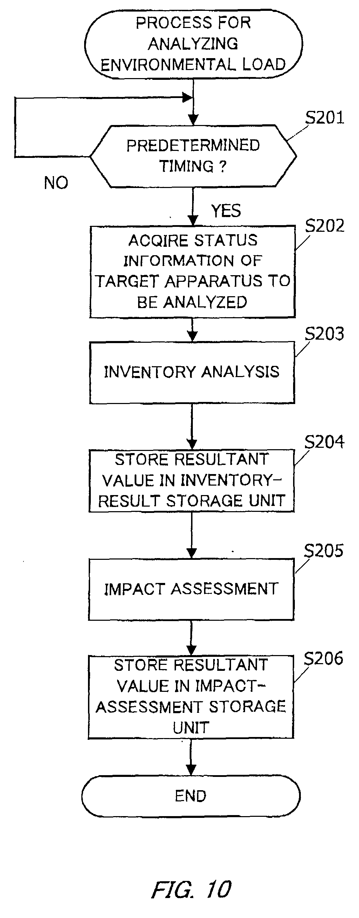

A process for analyzing the environmental load, which is carried out by the information analyzer 120, will now be described with reference to the flowchart of FIG. 10. At a predetermined timing for beginning the analysis of the environmental load (Step S201: YES), the controller 20 sends, to the information collection controller 10, an instruction for acquiring the status information of the copier 300 used by a target customer (including an office, a floor, a section, etc.), from the status-information database 12 (Step S202). The controller 20 acquires the status information at predetermined intervals of, for example, every day.

The controller 20 acquires product information regarding the copier 300 specified in the status information acquired in the step S202, from the product-information database 21, analyzes the status information based on the acquired product information, so as to perform inventory analysis for each apparatus type (the copier 300) (Step S203).

The controller 20 executes a program corresponding to a predetermined inventory analysis method. Specifically, the controller 20 calculates the environmental load in a predetermined period according to each assessment item. This calculation is performed based on information included in the product information and representing the amount of resources to be exhausted, the consumption of electricity, and the exhaust amount of substances, for copying a single page.

The resultant value based on each assessment item is stored in the inventory-result storage unit 22, as shown in FIG. 5 (Step S204).

The controller 20 performs impact assessment, based on the inventory results stored in the inventory-result storage unit 22 in the step S204 (Step S205). Specifically, the controller 20 executes a program based on a predetermined impact assessment method, and performs the impact assessment in the stage where a corresponding product concerned is used using the data stored in the inventory-result storage unit 22.

More specifically, the controller 20 sets the target unit of analysis. That is, the controller 20 sets whether the analysis should be performed in the unit of customer, office, floor, apparatus type, etc. In this embodiment, let it be assumed that the controller 20 has set that the analysis should be performed in the unit of office.

Upon inputting of an office code of a target office to be analyzed from the input unit 25, the controller 20 accesses the customer-information database 24, and acquires an apparatus ID corresponding to this target office.

The controller 20 acquires a result of the inventory analysis corresponding to the acquired apparatus ID, from the inventory-result storage unit 22. The controller 20 performs impact assessment using the acquired data of the result of the inventory analysis, based on a predetermined impact assessment method. By this, in the unit of office, the analyzed information regarding the environmental load can be obtained, in terms of predetermined assessment items for measuring the environmental load. In this case, such assessment items may include "Air Pollution", "Water Pollution", "Global Warming", "Resource Consumption", etc.

The result of the impact assessment is quantitative information representing the environmental load, resulting from the usage of one type or various types of copiers 300 which are used in a predetermined office.

The controller 20 stores the result of the impact assessment shown in FIG. 6 in the impact-assessment storage unit 23 (Step S206), and then completing this process for analyzing the environmental load.

Further, for example, in the case where the customer has made a contract with a business organization for acquiring information regarding the impact assessment, in terms of the environmental load totally in the unit of office, etc., the controller 20 obtains the assessment results which are sorted by each assessment item.

Specifically, the controller 20 performs the impact assessment in the above-described manner, according to each assessment item. The controller 20 includes a reference-value database which stores reference values regarding the quantitative information of the environmental load. The controller 20 compares the values of the environmental impact which is obtained as a result of the impact assessment, with each corresponding reference value stored in the reference-value database, so as to rank the target objects to be analyzed according to assessment results.

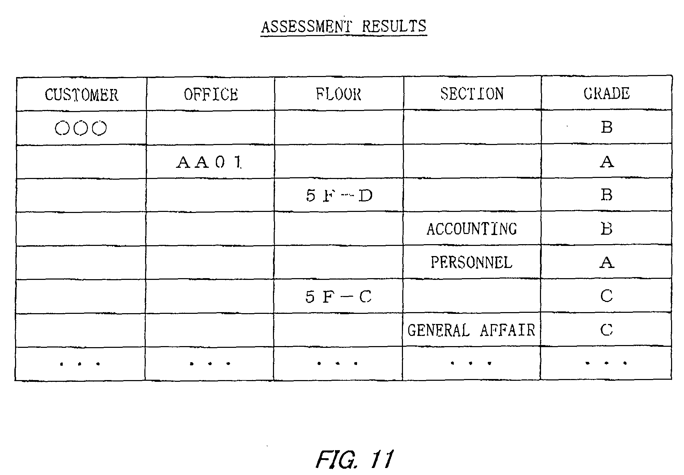

FIG. 11 shows a table representing assessment results of the environmental load, in the unit of entire company, office, floor, section, etc. In this illustration, the target objects to be analyzed are graded in the range from "A" to "C" based on the assessment results.

Each of those reference values stored in the reference-value database is a mean value of the environmental loads in terms of the same type of business or a mean value of the environmental loads in terms of various types of business, based on the general database or corresponding information collected by the business organization managing the information center 100.

Based on the assessment results shown in FIG. 11, the business organization makes a proposal regarding the environmental management, and gives the customer the proposal. The business organization finds out the gap in the users' environmental consciousness among offices, floors, etc., and proposes to the users that they be more conscious about the environmental matters.

As a result of enhancement in the environmental consciousness, if the business activities are performed in consideration of the environmental load so that ISO14000 standards of environmental quality control are adopted, the image of its company can be improved and the production cost may possibly be reduced.

In the above-described embodiment, the quantitative information of the environmental load is obtained using the LCA method, based on the information representing the actual status of the copier 300. According to this structure, the actual environmental load in the stage of using a target product concerned can be obtained with high accuracy, though it is difficult to obtain the quantitative information of the environmental load in that stage. Note that different environmental loads may be obtained in accordance with the usage method of the target product.

In the above-described embodiment, the explanations have been made to the case where a public network is adopted as the communication network 2. However, any other arbitrary communication network may be adopted as the communication network 2. For example, the Internet may be employed as the communication network 2. In such a case, the communication network 2 is formed of a combination of a private line, a public network, a mobile communication network, a cable TV (a CATV network), a cable broadcasting network, a radio communication network, etc.

In the above-described embodiment, those target products to be analyzed are copiers, by way of example. However, it is not limited to the copiers, and the present invention can be adopted for any other electronic apparatuses. In this case, the method of sending the status information to the information center 100 is arbitrary. For example, the information center 100 may set Web pages on the Internet, and status information of the target product may be input on one of the Web pages provided by the information center 100. Even in the case where the status information of the target object to the analyzed can not automatically be sent to the information center, the present invention can be adopted for such a case.

The system of the present invention can be realized by a general computer, without the need for a dedicated system. A program and data for controlling a computer to execute the above-described processes may be recorded on a medium (a floppy disk, CD-ROM, DVD or the like) and distributed, and the program may be installed into the computer and run on an OS (Operating System) to execute the above-described processes, thereby achieving the system of the present invention. The above program and data may be stored in a disk device or the like in the server device on the Internet, and embedded in a carrier wave. The program and data embedded in the carrier wave may be downloaded into the computer so as to realize the system of the present invention.

Various embodiments and changes may be made thereonto without departing from the broad spirit and scope of the invention. The above-described embodiment is intended to illustrate the present invention, not to limit the scope of the present invention. The scope of the present invention is shown by the attached claims rather than the embodiment. Various modifications made within the meaning of an equivalent of the claims of the invention and within the claims are to be regarded to be in the scope of the present invention.

## Claims

1. A method of acquiring information regarding an environmental load, **characterized by** comprising the steps of:
collecting status information representing a state or status of a predetermined apparatus through a communication network; and
measuring the environmental load, based on the status information collected at said collecting step.

2. The method according to claim 1, **characterized in that**
the status information includes at least either one of information representing an amount of resources consumed by the predetermined apparatus and information representing an operational time period of the predetermined apparatus.

3. The method according to claim 1 or 2, **characterized in that**
the status information is classified by predetermined assessment item of the environmental load so as to measure the environmental load, at said measuring step.

4. The method according to any one of claims 1 to 3, **characterized by** further comprising the step of
providing a user of the predetermined apparatus with a proposal for environmental control, based on the environmental load measured at said measuring.

5. An environmental-load information acquisition system which acquires status information of a predetermined apparatus (300) through a communication network (2), and which includes a server (100) acquiring information representing an environmental load resulting from the predetermined apparatus, said system being **characterized in that** said server includes:
a status-information collector (110) which collects the status information of the predetermined apparatus (300) therefrom, through the communication network (2); and
a measurement unit (120) which measures the environmental load of the predetermined apparatus, based on the status information collected by said status-information collector (110).

6. The environmental-load information acquisition system according to claim 5, **characterized in that**
the status information includes at least one of information representing an amount of resources consumed by the predetermined apparatus (300) and information representing an operational time period of the predetermined apparatus.

7. The environmental-load information acquisition system according to claim 5 or 6, **characterized in that**
said measurement unit (120) classifies the status information by predetermined assessment items so as to measure the environmental load.

8. A status-information acquisition device (400) which acquires status information of a predetermined apparatus (300) through a communication network (2), and which is used in an environmental-load information acquisition system acquiring information representing an environmental load resulting from the predetermined apparatus, said environmental-load information acquisition system being **characterized by** comprising:
a receiver (41) which is connected to said predetermined apparatus and receives the status information of said predetermined apparatus (300) therefrom;
a storage unit (42) which stores the received status information; and
a sender (43) which is connected to the communication network (2) and sends the status information stored in said storage unit (42).

9. The status-information acquisition device according to claim 8, **characterized in that**
said sender (43) sends the status information at predetermined intervals.

10. A program for controlling a computer to serve as a server included in the environmental-load information acquisition system according to any one of claims 5 to 7.
